(19) Europäisches Patentamt
European Patent Office
Office européen des brevets

(11) **EP 4 183 576 A1**

(12) **EUROPEAN PATENT APPLICATION**
published in accordance with Art. 153(4) EPC

(43) Date of publication:
**24.05.2023 Bulletin 2023/21**

(21) Application number: **21843012.2**

(22) Date of filing: **13.07.2021**

(51) International Patent Classification (IPC):
**B32B 27/00** $^{(2006.01)}$    **B32B 27/30** $^{(2006.01)}$
**B32B 27/32** $^{(2006.01)}$    **C08L 23/00** $^{(2006.01)}$
**C08L 23/08** $^{(2006.01)}$    **C08L 33/00** $^{(2006.01)}$

(52) Cooperative Patent Classification (CPC):
**B32B 27/00; B32B 27/30; B32B 27/32;
C08L 23/00; C08L 23/08; C08L 33/00**

(86) International application number:
**PCT/JP2021/026283**

(87) International publication number:
**WO 2022/014589 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2020   JP 2020120508**

(71) Applicant: **Mitsui Chemicals, Inc.
Tokyo 104-0028 (JP)**

(72) Inventors:
• **KUSUMOTO Masaya
  Sodegaura-shi, Chiba 299-0265 (JP)**
• **FUJIMURA Kojiro
  Sodegaura-shi, Chiba 299-0265 (JP)**
• **KURUSU Yu
  Sodegaura-shi, Chiba 299-0265 (JP)**

(74) Representative: **Hoffmann Eitle
Patent- und Rechtsanwälte PartmbB
Arabellastraße 30
81925 München (DE)**

(54) **AQUEOUS DISPERSION, METHOD FOR PRODUCING SAID AQUEOUS DISPERSION, AND MULTILAYER BODY**

(57)    There are provided an aqueous dispersion which is excellent in polymerization stability in the process of producing an aqueous dispersion and storage stability and from which an adhesive layer excellent in heat-sealing strength is obtained, a method for producing the aqueous dispersion, and a laminate including an adhesive layer obtained from a coated product of the aqueous dispersion and a substrate. An aqueous dispersion contains a resin component and water, in which the resin component includes composite particles (D) having an ethylene-unsaturated carboxylic acid copolymer mixture (A) and an acrylic polymer (B), and the ethylene-unsaturated carboxylic acid copolymer mixture (A) includes two or more kinds of ethylene-unsaturated carboxylic acid copolymers each having a different content of a structural unit derived from an unsaturated carboxylic acid.

EP 4 183 576 A1

**Description**

Technical Field

The present invention relates to an aqueous dispersion, a method for producing the aqueous dispersion, and a laminate.

Background Art

Techniques for bonding a substrate such as a plastic film, a vapor deposition film, a metal foil, paper, or a nonwoven fabric to another adherend or bonding substrates to each other by heat or pressure (that is, heat sealing) have been widely used in various industrial fields. In this heat-sealing technique, usually, an adhesive layer capable of being bonded by heat and pressure is provided on a substrate in advance, and the substrate and another adherend or the substrates are bonded to each other with the adhesive layer interposed therebetween.

As a material that can be used for such heat sealing, for example, an aqueous dispersion, which contains composite particles having an ethylene-unsaturated carboxylic acid copolymer and a polymer having an acrylic acid ester unit as a polymerization unit, and composite particles (E) having an ethylene-unsaturated carboxylic acid copolymer and an ethylene-vinyl acetate-based copolymer, has been proposed (see, for example, Patent Literature 1).

Citation List

Patent Literature

Patent Literature 1: WO 2018/142997 A

Summary of Invention

Technical Problem

The aqueous dispersion described in Patent Literature 1 is an extremely excellent aqueous dispersion in that an adhesive layer excellent in adhesion strength is obtainable even when the heat sealing time is short, and the blocking resistance of the adhesive layer is excellent.

However, problems may arise in polymerization stability in the process of producing this aqueous dispersion and storage stability of the obtained aqueous dispersion.

An object of the present invention is to provide an aqueous dispersion which is excellent in polymerization stability in the process of producing an aqueous dispersion and storage stability and from which an adhesive layer excellent in heat-sealing strength is obtained, a method for producing the aqueous dispersion, and a laminate including an adhesive layer obtained from a coated product of the aqueous dispersion and a substrate.

Solution to Problem

The present inventors have conducted intensive studies, and as a result, have found that the above-described problems can be solved, for example, by an aqueous dispersion having the following configuration, thereby completing the present invention. Configuration examples of the present invention are as follows.

[1] An aqueous dispersion containing: a resin component; and water,

in which the resin component includes composite particles (D) having an ethylene-unsaturated carboxylic acid copolymer mixture (A) and an acrylic polymer (B), and
the ethylene-unsaturated carboxylic acid copolymer mixture (A) includes two or more kinds of ethylene-unsaturated carboxylic acid copolymers each having a different content of a structural unit derived from an unsaturated carboxylic acid.

[2] The aqueous dispersion according to item [1], in which the total content of the structural units derived from an unsaturated carboxylic acid included in the ethylene-unsaturated carboxylic acid copolymers in the ethylene-unsaturated carboxylic acid copolymer mixture (A) is 5 mass% or more based on the total amount of structural units derived from monomers of the polymer included in the mixture (A).

[3] The aqueous dispersion according to item [1] or [2], in which the ethylene-unsaturated carboxylic acid copolymer mixture (A) includes one or more kinds of each of

an ethylene-unsaturated carboxylic acid copolymer (a1) having a content of a structural unit derived from an unsaturated carboxylic acid of 12 mass% or more and 30 mass% or less, and an ethylene-unsaturated carboxylic acid copolymer (a2) having a content of a structural unit derived from an unsaturated carboxylic acid of less than 12 mass%, and
a content of the ethylene-unsaturated carboxylic acid copolymer (a1) in the mixture (A) is 30 mass% or more and 90 mass% or less.

[4] The aqueous dispersion according to any one of items [1] to [3], in which a content of the ethylene-unsaturated carboxylic acid copolymer mixture (A) in the composite particles (D) is 20 mass% or more and 80 mass% or less, and a content of the acrylic polymer (B) is 20 mass% or more and 80 mass% or less. (Provided that the total amount of (A) and (B) is regarded as 100 mass%.)

[5] The aqueous dispersion according to any one of items [1] to [4], in which the ethylene-unsaturated carboxylic acid copolymer mixture (A) further includes an olefin-based polymer (c), and
the total content of the ethylene-unsaturated carboxylic acid copolymers in the mixture (A) is 60 mass% or more.

[6] The aqueous dispersion according to item [5], in which the olefin-based polymer (c) includes at least one polymer selected from the group consisting of low-density polyethylene, an ethylene-1-butene copolymer, an ethylene-propylene copolymer, an ethylene-1-butene-propylene copolymer, an ethylene-propylene-ethylidene norbornene copolymer, an ethylene-(meth)acrylic acid ester copolymer, an ethylene-(meth)acrylic acid ester-unsaturated carboxylic acid copolymer, an ethylene-vinyl acetate copolymer, and an ethylene-vinyl acetate-carbon monoxide copolymer.

[7] A method for producing the aqueous dispersion according to any one of items [1] to [6], the method including:

a step of emulsifying, in the presence of water, an ethylene-unsaturated carboxylic acid copolymer mixture (A) containing two or more kinds of ethylene-unsaturated carboxylic acid copolymers each having a different content of a structural unit derived from an unsaturated carboxylic acid to obtain a dispersion 1; and
a step of adding a monomer including a (meth)acrylic acid ester into the dispersion 1 in the presence of a polymerization initiator and polymerizing an acrylic polymer (B) to obtain a dispersion 2 containing composite particles (D) having the ethylene-unsaturated carboxylic acid copolymer mixture (A) and the acrylic polymer (B).

[8] A laminate including: a substrate; and an adhesive layer laminated on at least one surface of the substrate, in which the adhesive layer is obtained by drying a coated product of the aqueous dispersion according to any one of items [1] to [6].

[9] The laminate according to item [8], further including an adherend layer laminated on a surface of the adhesive layer opposite to a surface in contact with the substrate.

[10] The laminate according to item [8] or [9], in which the substrate is a plastic film, a vapor deposition film, a metal foil, paper, or a nonwoven fabric.

[11] The laminate according to item [9] or [10], in which the adherend layer is a plastic film, a vapor deposition film, a metal foil, paper, or a nonwoven fabric.

[12] The laminate according to any one of items [9] to [11], in which the adherend layer is a plastic film obtained from polyvinyl chloride, polyvinylidene chloride, or a mixture thereof.

[13] A laminate including: a substrate; and an adhesive layer laminated on at least one surface of the substrate, in which the adhesive layer includes composite particles (D) having an ethylene-unsaturated carboxylic acid copolymer mixture (A) and an acrylic polymer (B), and
the ethylene-unsaturated carboxylic acid copolymer mixture (A) includes two or more kinds of ethylene-unsaturated carboxylic acid copolymers each having a different content of a structural unit derived from an unsaturated carboxylic acid.

Advantageous Effects of Invention

According to the present invention, obtained are, for example, an aqueous dispersion which is excellent in polymerization stability in the process of producing an aqueous dispersion and storage stability and from which an adhesive layer excellent in heat-sealing strength is obtained, a method for producing the aqueous dispersion, and a laminate including an adhesive layer obtained from a coated product of the aqueous dispersion and a substrate.

Description of Embodiments

In the present specification, a numerical range expressed by using "to" means a range including numerical values described before and after "to" as a lower limit value and an upper limit value.

In the numerical ranges stated hierarchically in the present specification, the upper limit value or the lower limit value described in a numerical range of a certain hierarchical level may be replaced with the upper limit value or the lower limit value of a numerical range of another hierarchical level.

An aqueous dispersion of the present invention contains a resin component and water in which the resin component is dispersed.

The resin component includes composite particles (D) having an ethylene-unsaturated carboxylic acid copolymer mixture (A) and an acrylic polymer (B). However, the ethylene-unsaturated carboxylic acid copolymer mixture (A) does not include the acrylic polymer (B).

<Ethylene-Unsaturated Carboxylic Acid Copolymer Mixture (A)>

The ethylene-unsaturated carboxylic acid copolymer mixture (A) includes two or more kinds of ethylene-unsaturated carboxylic acid copolymers each having a different content of a structural unit derived from an unsaturated carboxylic acid.

[Ethylene-Unsaturated Carboxylic Acid Copolymer]

The two or more kinds of ethylene-unsaturated carboxylic acid copolymers included in the mixture (A) are each obtained by polymerizing a monomer component (a') including ethylene and an unsaturated carboxylic acid.

The unsaturated carboxylic acid is a monomer having at least one ethylenically unsaturated bond and a carboxy group. Examples of the unsaturated carboxylic acid include monobasic acids having an ethylenically unsaturated bond such as acrylic acid, methacrylic acid, and crotonic acid; and dibasic acids having an ethylenically unsaturated bond such as maleic acid, fumaric acid, and itaconic acid.

These unsaturated carboxylic acids may be used singly or in combination of two or more kinds thereof.

Among the unsaturated carboxylic acids, from the viewpoint of water resistance, monobasic acids having an ethylenically unsaturated bond are preferable, and acrylic acid and methacrylic acid are more preferable.

The content ratio of ethylene in the monomer component (a') may be appropriately set according to the content of a constituent unit derived from ethylene of an ethylene-unsaturated carboxylic acid copolymer to be obtained. Similarly, the content ratio of an unsaturated carboxylic acid in the monomer component (a') may be appropriately set according to the content of a constituent unit derived from an unsaturated carboxylic acid of the ethylene-unsaturated carboxylic acid copolymer.

The method for polymerizing the monomer component (a') is not particularly limited as long as a desired ethylene-unsaturated carboxylic acid copolymer is obtained, and examples of the polymerization method therefor include known polymerization methods. The ethylene-unsaturated carboxylic acid copolymer is obtained, for example, by bringing the monomer component (a') into contact with a polymerization initiator such as a peroxide under high temperature and high pressure conditions and polymerizing the monomer component.

The ethylene-unsaturated carboxylic acid copolymer can be obtained as an aqueous dispersion (dispersion) in which polymer particles thereof (resin components) are dispersed in water. In such a case, for example, the monomer component (a') can be polymerized by the methods described, for example, in JP H7-008933 B, JP H5-039975 B, JP H4-030970 B, JP S42-000275 B, JP S42-023085 B, JP S45-029909 B, and JP S51-062890 A. The ethylene-unsaturated carboxylic acid copolymer has self-emulsifying properties.

When the ethylene-unsaturated carboxylic acid copolymer is polymerized, from the viewpoint of improving polymerization stability, as necessary, an emulsifier (surfactant) described below may be added. The addition ratio of the emulsifier is appropriately set according to the purpose and use application.

When the ethylene-unsaturated carboxylic acid copolymer is polymerized, from the viewpoint of improving polymerization stability, for example, additives such as a pH adjusting agent, a metal ion sealing agent (for example, ethylenediaminetetraacetic acid or a salt thereof), and a molecular weight regulator (also known as: chain transfer agent; for example, mercaptans or a low-molecular-weight halogen compound) may be added.

The ethylene-unsaturated carboxylic acid copolymers included in the ethylene-unsaturated carboxylic acid copolymer mixture (A) are preferably neutralized and used from the viewpoint of achieving improvement in polymerization stability in the process of producing the composite particles (D) and improvement in storage stability.

The neutralization is performed, for example, by adding a basic compound as a neutralizing agent to the ethylene-unsaturated carboxylic acid copolymer. For example, the neutralization can be performed by adding a basic compound as a neutralizing agent to the aqueous dispersion of the ethylene-unsaturated carboxylic acid copolymer.

Examples of the basic compound used as a neutralizing agent include inorganic basic compounds such as sodium hydroxide and potassium hydroxide; and organic basic compounds represented by amines such as ammonia, triethylamine, triethanolamine, and dimethylethanolamine.

These basic compounds may be used singly or in combination of two or more kinds thereof.

Among these basic compounds, inorganic basic compounds are preferable, and sodium hydroxide is more preferable.

The amount of the basic compound added is, for example, 5 mol or more, preferably 30 mol or more, and more preferably 50 mol or more, and is, for example, 200 mol or less and preferably 150 mol or less, per 100 mol of the carboxy group included in the whole ethylene-unsaturated carboxylic acid copolymers included in the ethylene-unsaturated carboxylic acid copolymer mixture (A), from the viewpoint of achieving improvement in polymerization stability in the process of producing the composite particles (D) and improvement in storage stability.

When the amount of the basic compound added is less than the above range, the polymerization stability at the time of producing the composite particles (D) or the storage stability of the composite particles (D) may be impaired. When the amount of the basic compound added exceeds the above range, the viscosity of an aqueous dispersion to be obtained may be increased, or the handleability of the aqueous dispersion may be deteriorated.

After the neutralizing agent is added to the ethylene-unsaturated carboxylic acid copolymer for neutralization, it is preferable to hold at a predetermined temperature for a predetermined time.

As holding conditions, the retention temperature is, for example, 40°C or higher and preferably 50°C or higher, and is, for example, 190°C or lower and preferably 180°C or lower. The retention time is, for example, 30 minutes or longer and preferably 1 hour or longer, and is, for example, 12 hours or shorter and preferably 10 hours or shorter.

By holding under the above conditions, the carboxy group included in the ethylene-unsaturated carboxylic acid copolymer is reliably neutralized, so that improvement in polymerization stability in the process of producing the composite particles (D) and improvement in storage stability of the composite particles (D) can be achieved.

When the ethylene-unsaturated carboxylic acid copolymers included in the ethylene-unsaturated carboxylic acid copolymer mixture (A) are neutralized, the degree of neutralization of the ethylene-unsaturated carboxylic acid copolymer is, for example, 20% or more and preferably 50% or more, and is, for example, 200% or less and preferably 150% or less, as a whole of the two or more kinds of ethylene-unsaturated carboxylic acid copolymers. The degree of neutralization described herein means mol% in which the carboxy group included in the whole ethylene-unsaturated carboxylic acid copolymers is neutralized by a basic compound as a neutralizing agent.

When the degree of neutralization is in the above range, an adhesive layer excellent in heat-sealing strength is obtained from the aqueous dispersion of the present invention. The degree of neutralization is calculated in accordance with Examples described below.

The weight average molecular weight of each of the ethylene-unsaturated carboxylic acid copolymers included in the ethylene-unsaturated carboxylic acid copolymer mixture (A) is, for example, 10,000 or more and preferably 30,000 or more, and is, for example, 200,000 or less and preferably 150,000 or less, in terms of standard polystyrene by gel permeation chromatography (GPC) measurement.

The melting point of each of the ethylene-unsaturated carboxylic acid copolymers included in the ethylene-unsaturated carboxylic acid copolymer mixture (A) is, for example, 55°C or higher and preferably 65°C or higher, and is, for example, 110°C or lower and preferably 100°C or lower. The melting point can be determined by differential scanning calorimetry (DSC).

The ethylene-unsaturated carboxylic acid copolymer mixture (A) includes two or more kinds of ethylene-unsaturated carboxylic acid copolymers each having a different content of a structural unit derived from an unsaturated carboxylic acid. When such two or more kinds of ethylene-unsaturated carboxylic acid copolymers use an ethylene-unsaturated carboxylic acid copolymer (a), the polymerization stability in the process of producing the composite particles (D) is improved and the storage stability of the composite particles (D) is improved.

As the two or more kinds of ethylene-unsaturated carboxylic acid copolymers each having a different content of a structural unit derived from an unsaturated carboxylic acid included in the ethylene-unsaturated carboxylic acid copolymer mixture (A), one or more kinds of each of an ethylene-unsaturated carboxylic acid copolymer (a1) having a content of a structural unit derived from an unsaturated carboxylic acid of 12 mass% or more and 30 mass% or less, and an ethylene-unsaturated carboxylic acid copolymer (a2) having a content of a structural unit derived from an unsaturated carboxylic acid of less than 12 mass% are preferably included. When the ethylene-unsaturated carboxylic acid copolymers use one or more kinds of each of the ethylene-unsaturated carboxylic acid copolymers (a1) and (a2) as the ethylene-unsaturated carboxylic acid copolymer (a), the polymerization stability in the process of producing the composite particles (D) is further improved, and the storage stability of the aqueous dispersion including the composite particles (D) is further improved.

From the viewpoint of promoting improvement in polymerization stability in the process of producing the composite particles (D) or storage stability of the composite particles (D), the content of the structural unit derived from an unsaturated carboxylic acid of the ethylene-unsaturated carboxylic acid copolymer (a1) is preferably 12 mass% or more and more preferably 15 mass% or more, and is preferably 30 mass% or less and more preferably 25 mass% or less.

The weight average molecular weight of the ethylene-unsaturated carboxylic acid copolymer (a1) is, for example, 10,000 or more and preferably 30,000 or more, and is, for example, 200,000 or less and preferably 150,000 or less, in terms of standard polystyrene by GPC measurement.

The melting point of the ethylene-unsaturated carboxylic acid copolymer (a1) is, for example, 55°C or higher and preferably 65°C or higher, and is, for example, 110°C or lower and preferably 100°C or lower.

From the viewpoint of promoting improvement in polymerization stability in the process of producing the composite particles (D) or storage stability of the composite particles (D), the content of the structural unit derived from an unsaturated carboxylic acid of the ethylene-unsaturated carboxylic acid copolymer (a2) is preferably 1 mass% or more and more preferably 5 mass% or more, and is preferably less than 12 mass% and more preferably 11 mass% or less.

The weight average molecular weight of the ethylene-unsaturated carboxylic acid copolymer (a2) is, for example, 10,000 or more and preferably 30,000 or more, and is, for example, 200,000 or less and preferably 150,000 or less, in terms of standard polystyrene by GPC measurement.

The melting point of the ethylene-unsaturated carboxylic acid copolymer (a2) is, for example, 55°C or higher and preferably 65°C or higher, and is, for example, 110°C or lower and preferably 100°C or lower.

From the viewpoint of promoting improvement in polymerization stability in the process of producing the composite particles (D) or storage stability of the composite particles (D), the total content (average value of the contents) of the structural units derived from an unsaturated carboxylic acid included in the ethylene-unsaturated carboxylic acid copolymers in the ethylene-unsaturated carboxylic acid copolymer mixture (A) is preferably 5 mass% or more and more preferably 8 mass% or more, and is preferably 30 mass% or less and more preferably 25 mass% or less, based on the total amount of structural units derived from monomers of the polymer included in the mixture (A). The total content (average value of the contents) of the structural units derived from an unsaturated carboxylic acid described above can be determined by a neutralization titration method.

From the viewpoint of promoting improvement in polymerization stability in the process of producing the composite particles (D) or storage stability of the composite particles (D) and improving the water resistance of a coating film to be obtained, the content of the structural unit derived from ethylene included in the ethylene-unsaturated carboxylic acid copolymer (a) in the ethylene-unsaturated carboxylic acid copolymer mixture (A) is preferably 70 mass% or more and more preferably 75 mass% or more, and is preferably 95 mass% or less and more preferably 92 mass% or less, based on the total amount of structural units derived from monomers of the polymer included in the mixture (A).

The content of each of the two or more kinds of ethylene-unsaturated carboxylic acid copolymers included in the ethylene-unsaturated carboxylic acid copolymer mixture (A) is not particularly limited as long as the effects of the present invention are not impaired.

For example, when one or more kinds of each of the ethylene-unsaturated carboxylic acid copolymer (a1) and the ethylene-unsaturated carboxylic acid copolymer (a2) described above are included as the ethylene-unsaturated carboxylic acid copolymer mixture (A), from the viewpoint of promoting improvement in polymerization stability in the process of producing the composite particles (D) or storage stability of the composite particles (D), the content of the ethylene-unsaturated carboxylic acid copolymer (a1) in the mixture (A) is preferably 30 mass% or more and more preferably 40 mass% or more, and is preferably 90 mass% or less and more preferably 80 mass% or less. In the above case, the content of the ethylene-unsaturated carboxylic acid copolymer (a2) in the mixture (A) is preferably 10 mass% or more and more preferably 20 mass% or more, and is preferably 70 mass% or less and more preferably 60 mass% or less.

In order to include two or more kinds of ethylene-unsaturated carboxylic acid copolymers each having a different content of a structural unit derived from an unsaturated carboxylic acid as the ethylene-unsaturated carboxylic acid copolymer mixture (A), a method for producing a mixture of these copolymers is not particularly limited. For example, the mixture can be produced by melt-kneading the two or more kinds of copolymers at a temperature equal to or higher than the melting point of an ethylene-unsaturated carboxylic acid copolymer having the highest melting point included in the ethylene-unsaturated carboxylic acid copolymer mixture (A), preferably 150°C or higher. As described above, when each of the ethylene-unsaturated carboxylic acid copolymers is obtained as an aqueous dispersion including an ethylene-unsaturated carboxylic acid copolymer, the aqueous dispersion can be produced as an aqueous dispersion including the mixture (A) by heating and pressurizing these aqueous dispersions as necessary and mixing the aqueous dispersions.

When the ethylene-unsaturated carboxylic acid copolymer is used as a neutralized product of the ethylene-unsaturated carboxylic acid copolymer as described above, for example, as described above, the aqueous dispersion can be produced by melt-kneading two or more kinds of ethylene-unsaturated carboxylic acid copolymers to prepare a melt-kneaded product, putting the obtained melt-kneaded product into an aqueous solution containing a neutralizing agent and water, which is held at preferably a temperature equal to or higher than the melting point of an ethylene-unsaturated carboxylic acid copolymer having the highest melting point, more preferably 150°C or higher, and further preferably 170°C or higher, and mixing these melt-kneaded product and aqueous solution. Specific examples and amounts added of the neutralizing agent, and for example, the holding conditions at the time of mixing are the same as those described in the section of production of a neutralized product of an ethylene-unsaturated carboxylic acid copolymer. Since the ethylene-unsaturated carboxylic acid copolymer has self-emulsifying properties, the amount of the emulsifier (surfactant) blended can be reduced. When the amount of the emulsifier blended is large, adhesiveness may be affected.

The weight average molecular weight of the two or more kinds of ethylene-unsaturated carboxylic acid copolymers included in the ethylene-unsaturated carboxylic acid copolymer mixture (A) as a whole is, for example, 10,000 or more and preferably 30,000 or more, and is, for example, 200,000 or less and preferably 150,000 or less, in terms of standard polystyrene by gel permeation chromatography (GPC) measurement.

The melting point of the two or more kinds of ethylene-unsaturated carboxylic acid copolymers included in the ethylene-unsaturated carboxylic acid copolymer mixture (A) as a whole is, for example, 55°C or higher and preferably 65°C or higher, and is, for example, 110°C or lower and preferably 100°C or lower.

The average content of monomer units derived from an unsaturated carboxylic acid of the whole two or more kinds of ethylene-unsaturated carboxylic acid copolymers included in the ethylene-unsaturated carboxylic acid copolymer mixture (A) is, for example, 8 mass% or more and preferably 10 mass% or more, and is, for example, 25 mass% or less and preferably 22 mass% or less.

The average content of monomer units derived from ethylene of the whole two or more kinds of ethylene-unsaturated carboxylic acid copolymers included in the ethylene-unsaturated carboxylic acid copolymer mixture (A) is, for example, 75 mass% or more and preferably 78 mass% or more, and is, for example, 92 mass% or less and preferably 90 mass% or less. The average content of the monomer units derived from an unsaturated carboxylic acid and the average content of the monomer units derived from ethylene are determined by a Fourier transform infrared spectrophotometer (FT-IR).

[Olefin-Based Polymer (c)]

The ethylene-unsaturated carboxylic acid copolymer mixture (A) may further include an olefin-based polymer (c). The olefin-based polymer (c) is a polymer having a structural unit derived from an olefin (c'-1). However, the ethylene-unsaturated carboxylic acid copolymer is not included in the olefin-based polymer (c).

Examples of the olefin-based polymer (c) include the following olefin-based polymers (c1) to (c3).

(1) An olefin-based polymer (c1) obtained by polymerizing only an olefin (c'-1).

(2) An olefin-based polymer (c2) obtained by polymerizing an olefin (c'-1) and a monomer (c'-3) copolymerizable with the olefin (c'-1) other than a carboxy group-containing monomer (c'-2).

(3) An olefin-based polymer (c3) obtained by polymerizing an olefin (c'-1), a carboxy group-containing monomer (c'-2), and a monomer (c'-3) copolymerizable with the olefin (c'-1) other than the carboxy group-containing monomer (c'-2). However, the ethylene-unsaturated carboxylic acid copolymer (a) is not included in the olefin-based polymer (c3) .

Examples of the olefin (c'-1) include α-olefins such as ethylene, propylene, 1-butene, 3-methyl-1-butene, 4-methyl-1-pentene, 3-methyl-1-pentene, 1-heptene, 1-hexene, 1-decene, and 1-dodecene; and conjugated dienes or non-conjugated dienes such as butadiene, ethylidene norbornene, dicyclopentadiene, and 1,5-hexadiene. These olefins may be used singly or in combination of two or more kinds thereof.

Examples of the carboxy group-containing monomer (c'-2) include (meth)acrylic acid, maleic acid, itaconic acid, crotonic acid, and fumaric acid. Among these, from the viewpoint of improving heat sealability, acrylic acid and methacrylic acid are preferable. These monomers (c'-2) may be used singly or in combination of two or more kinds thereof. The (meth)acrylic acid means acrylic acid and/or methacrylic acid.

Examples of the monomer (c'-3), that is, the monomer copolymerizable with the olefin (c'-1) other than the carboxy group-containing monomer (c'-2) include vinyl acetate, vinyl alcohol, a (meth)acrylic acid ester, and carbon monoxide. Among these, from the viewpoint of improving the heat sealability of the composite particles (D) to be obtained, vinyl acetate, a (meth)acrylic acid ester, and carbon monoxide are preferable. These monomers (c'-3) may be used singly or in combination of two or more kinds thereof. The (meth)acrylic acid ester means an acrylic acid ester and/or a methacrylic acid ester. Similarly, (meth)acryl means acryl and/or methacryl, and (meth)acrylate means acrylate and/or methacrylate.

[Ratio of Olefin (c'-1)/Monomer (c'-2)/Monomer (c'-3)]

The ratio of the olefin (c'-1), the monomer (c'-2), and the monomer (c'-3) is preferably set as follows. That is, when the total amount of the olefin (c'-1), the carboxy group-containing monomer (c'-2), and the monomer (c'-3) is regarded as 100 mass%,

the ratio is preferably 100 to 35.0 mass% of the olefin (c'-1), 0 to 65.0 mass% of the carboxy group-containing monomer (c'-2), and 0 to 50.0 mass% of the monomer (c'-3), and

the ratio is more preferably 100 to 50.0 mass% of the olefin (c'-1), 0 to 50.0 mass% of the carboxy group-containing monomer (c'-2), and 0 to 40.0 mass% of the monomer (c'-3). When the ratio of the olefin (c'-1) is less than 35.0 mass%, the heat sealability may be deteriorated.

Examples of the olefin-based polymer (c1) include low-density polyethylene, high-density polyethylene, polypropylene, poly 1-butene, poly 3-methyl-1-butene, poly 4-methyl-1-pentene, poly 3-methyl-1-pentene; and homopolymers or copolymers of an α-olefin having one or more carbon atoms such as an ethylene-propylene copolymer, an ethylene-1-butene copolymer, a propylene-1-butene copolymer, an ethylene-1-butene-propylene copolymer, and a propylene-1-butene-ethylene copolymer.

Examples of the olefin-based polymer (c2) include copolymers of an α-olefin having one or more carbon atoms and, for example, a conjugated diene or a non-conjugated diene, such as an ethylene-butadiene copolymer, an ethylene-ethylidene norbornene copolymer, an ethylene-propylene-butadiene copolymer, an ethylene-propylene-dicyclopentadiene copolymer, an ethylene-propylene-ethylidene norbornene copolymer, and ethylene-propylene-1,5-hexadiene copolymer; and copolymers of an α-olefin having one or more carbon atoms and other monomers copolymerizable with an α-olefin having one or more carbon atoms other than an unsaturated carboxylic acid, such as an ethylene-(meth)acrylic acid ester copolymer, an ethylene-vinyl acetate copolymer, an ethylene-vinyl acetate-carbon monoxide copolymer, and an ethylene-vinyl alcohol copolymer.

For example, when an adherend is obtained from polyvinyl chloride, polyvinylidene chloride, or a mixture thereof, from the viewpoint of improving the heat sealability of the composite particles (D), among the olefin-based polymers (c), low-density polyethylene, an ethylene-1-butene copolymer, an ethylene-propylene copolymer, an ethylene-1-butene-propylene copolymer, an ethylene-propylene-ethylidene norbornene copolymer, an ethylene-(meth)acrylic acid ester copolymer, an ethylene-(meth)acrylic acid ester-unsaturated carboxylic acid copolymer, an ethylene-vinyl acetate copolymer, and an ethylene-vinyl acetate-carbon monoxide copolymer are preferable.

When an ethylene-vinyl acetate copolymer is used as the olefin-based polymer (c), the content of the structural unit derived from ethylene in the ethylene-vinyl acetate copolymer is preferably 50 to 95 mass%, and the content of the structural unit derived from vinyl acetate is preferably 5 to 50 mass%.

The content of the structural unit derived from ethylene in the ethylene-vinyl acetate copolymer is preferably 52 mass% or more and more preferably 54 mass% or more, and is preferably 90 mass% or less and more preferably 85 mass% or less, and from the viewpoint of improving the adhesion strength of the composite particles (D), the content thereof is further preferably 80 mass% or less. The content of the structural unit derived from vinyl acetate in the ethylene-vinyl acetate copolymer is preferably 10 mass% or more and more preferably 15 mass% or more, and from the viewpoint of improving the adhesion strength of the composite particles (D), the content thereof is further preferably 20 mass% or more, and is preferably 48 mass% or less and more preferably 46 mass% or less.

When the copolymerization ratio of ethylene and vinyl acetate is in the above range, the composite particles (D) tend to be excellent in low-temperature heat sealability.

In the ethylene-vinyl acetate-carbon monoxide copolymer, the content of the structural unit derived from carbon monoxide is preferably 2 to 40 mass% and more preferably 5 to 30 mass% based on the total amount of structural units derived from monomers included in the copolymer.

The melt flow rate (MFR) (190°C, 2.16 kg load) of the ethylene-vinyl acetate-based copolymer is preferably 2 to 1000 g/10 min and more preferably 5 to 500 g/10 min.

The olefin-based polymer (c) may be used singly or in combination of two or more kinds thereof.

When the olefin-based polymer (c) is included, the olefin-based polymer (c) is integrated with an ethylene-unsaturated carboxylic acid copolymer including two or more kinds of ethylene-unsaturated carboxylic acid copolymers each having a different content of a structural unit derived from an unsaturated carboxylic acid to form the ethylene-unsaturated carboxylic acid copolymer mixture (A). In this case, when the two or more kinds of ethylene-unsaturated carboxylic acid copolymers and the olefin-based polymer (c) are included, the form of the ethylene-unsaturated carboxylic acid copolymer mixture (A) is not particularly limited, and may be, for example, any of structures such as a core/shell structure, a composite structure, a localized structure, a daruma-shaped structure, an octopus-shaped structure, a raspberry-shaped structure, a multiparticle composite structure, and an IPN structure.

The method for producing the ethylene-unsaturated carboxylic acid copolymer mixture (A) including the olefin-based polymer (c) is not particularly limited, and the ethylene-unsaturated carboxylic acid copolymer mixture (A) including the olefin-based polymer (c) can be produced, for example, by a known production method. For example, the mixture can be produced by melt-kneading a plurality of polymers included as components of the mixture (A) at a temperature equal to or higher than the melting point of a polymer having the highest melting point included in the ethylene-unsaturated carboxylic acid copolymer mixture (A), preferably 150°C or higher.

When each of the polymers is obtained as an aqueous dispersion including a polymer, the aqueous dispersion can be produced as an aqueous dispersion including the mixture (A) by heating and pressurizing these aqueous dispersions as necessary and mixing the aqueous dispersions.

The aqueous dispersion including the ethylene-unsaturated carboxylic acid copolymer mixture (A) may be produced by simultaneously emulsifying the ethylene-unsaturated carboxylic acid copolymer (a) including two or more kinds of ethylene-unsaturated carboxylic acid copolymers and the olefin-based polymer (c). Specifically, as described above, the aqueous dispersion can be produced by melt-kneading two or more kinds of ethylene-unsaturated carboxylic acid copolymers to produce a melt-kneaded product, putting the obtained melt-kneaded product into water, which is held at preferably a temperature equal to or higher than the melting point of an ethylene-unsaturated carboxylic acid copolymer having the highest melting point, more preferably 150°C or higher, and further preferably 170°C or higher, and mixing these melt-kneaded product and water. When the ethylene-unsaturated carboxylic acid copolymer is used as a neutralized product of the above-described ethylene-unsaturated carboxylic acid copolymer, the aqueous dispersion can be produced by putting the obtained melt-kneaded product into an aqueous solution containing a neutralizing agent and water, which is held at preferably a temperature equal to or higher than the above-described temperature, and mixing these melt-kneaded product and aqueous solution. Specific examples and amounts added of the neutralizing agent, and for example, the holding conditions at the time of mixing are the same as those described in the section of production of a neutralized product of an ethylene-unsaturated carboxylic acid copolymer.

As the olefin-based polymer (c), a commercially available product may be used.

When the ethylene-unsaturated carboxylic acid copolymer mixture (A) includes the olefin-based polymer (c), the content of the olefin-based polymer (c) is, for example, 1 mass% or more, preferably 5 mass% or more, and more preferably 10 mass% or more, and is, for example, 95 mass% or less, preferably 70 mass% or less, and more preferably less than 40 mass%, based on the total amount of the ethylene-unsaturated carboxylic acid copolymers and the olefin-based polymer (c). The total content of the ethylene-unsaturated carboxylic acid copolymers is, for example, 5 mass% or more, preferably 30 mass% or more, and more preferably 60 mass% or more, and is, for example, 99 mass% or less, preferably 95 mass% or less, and more preferably 90 mass% or less, based on the total amount of the ethylene-unsaturated carboxylic acid copolymers and the olefin-based polymer (c).

When the contents of the ethylene-unsaturated carboxylic acid copolymers and the olefin-based polymer (c) are in the above ranges, the composite particles (D) having excellent adhesion strength can be obtained.

In the case of including the ethylene-unsaturated carboxylic acid copolymer mixture (A) including the olefin-based polymer (c), the total amount of the ethylene-unsaturated carboxylic acid copolymers and the content of the olefin-based polymer (c) can be calculated from the charging ratio of the raw material components.

When the ethylene-unsaturated carboxylic acid copolymer mixture (A) is obtained as an aqueous dispersion, the weight average particle diameter (measurement method: light scattering measurement) of particles composed of the resin component is, for example, 0.01 um or more and preferably 0.02 um or more, and is, for example, 10 um or less and preferably 1 um or less.

When the ethylene-unsaturated carboxylic acid copolymer mixture (A) is obtained as an aqueous dispersion, the solid content concentration in the aqueous dispersion (the nonvolatile content concentration of, for example, the ethylene-unsaturated carboxylic acid copolymer) is, for example, 10 mass% or more and preferably 20 mass% or more, and is, for example, 60 mass% or less and preferably 50 mass% or less.

<Acrylic Polymer (B)>

The acrylic polymer (B) is a polymer obtained by polymerizing a monomer including a (meth)acrylic acid ester, and has a structural unit derived from a (meth)acrylic acid ester.

Examples of the (meth)acrylic acid ester include (meth)acrylic acid esters having alkyl with 1 to 12 carbon atoms such as methyl (meth)acrylate, ethyl (meth)acrylate, propyl (meth)acrylate, n-butyl (meth)acrylate, iso-butyl (meth)acrylate, s-butyl (meth)acrylate, t-butyl (meth)acrylate, 2-ethylhexyl (meth)acrylate, and lauryl (meth)acrylate.

Among these (meth)acrylic acid esters, methyl (meth)acrylate, ethyl (meth)acrylate, n-butyl (meth)acrylate, iso-butyl (meth)acrylate, t-butyl (meth)acrylate, and 2-ethylhexyl (meth)acrylate are preferable, methyl (meth)acrylate and n-butyl (meth)acrylate are more preferable, and methyl methacrylate, n-butyl methacrylate, and butyl acrylate are further preferable.

Among the (meth)acrylic acid esters, from the viewpoint of water resistance, a methacrylic acid ester is desirably used.

These (meth)acrylic acid esters may be used singly or in combination of two or more kinds thereof.

The acrylic polymer (B) may contain a structural unit derived from a monomer copolymerizable with the (meth)acrylic acid ester.

Examples of the monomer copolymerizable with the (meth)acrylic acid ester include a functional group-containing vinyl monomer, vinyl esters, an aromatic vinyl monomer, an N-substituted unsaturated carboxylic acid amide, a heterocyclic vinyl compound, a vinylidene halide compound, $\alpha$-olefins, and dienes.

Examples of the functional group-containing vinyl monomer include a carboxy group-containing vinyl monomer, a hydroxyl group-containing vinyl monomer, an amino group-containing vinyl monomer, a glycidyl group-containing vinyl monomer, a cyano group-containing vinyl monomer, a sulfonic acid group-containing vinyl monomer and a salt thereof, an acetoacetoxy group-containing vinyl monomer, a phosphoric acid group-containing compound, and an amide group-containing vinyl monomer.

Examples of the carboxy group-containing vinyl monomer include (meth)acrylic acid, maleic anhydride, maleic acid, fumaric acid, itaconic acid, and crotonic acid.

Examples of the hydroxyl group-containing vinyl monomer include 2-hydroxyethyl (meth)acrylate and 2-hydroxypropyl (meth)acrylate.

Examples of the amino group-containing vinyl monomer include 2-aminoethyl (meth)acrylate, 2-(N-methylamino)ethyl (meth)acrylate, and 2-(N,N-dimethylamino)ethyl (meth)acrylate.

Examples of the glycidyl group-containing vinyl monomer include glycidyl (meth)acrylate.

Examples of the cyano group-containing vinyl monomer include acrylonitrile and methacrylonitrile.

Examples of the sulfonic acid group-containing vinyl monomer include allylsulfonic acid and methallylsulfonic acid. Examples of the salt thereof include alkali metal salts such as a sodium salt and a potassium salt of the sulfonic acid group-containing vinyl monomer, for example, an ammonium salt. Specific examples of the salt of the sulfonic acid group-containing vinyl monomer include sodium allylsulfonate, sodium methallylsulfonate, and ammonium methallylsulfonate.

Examples of the acetoacetoxy group-containing vinyl monomer include acetoacetoxy ethyl (meth)acrylate.

Examples of the phosphoric acid group-containing compound include 2-methacryloyloxyethyl acid phosphate.

Examples of the amide group-containing vinyl monomer include acrylamide and methacrylamide.

Examples of the vinyl esters include vinyl propionate (provided that vinyl acetate is excluded).

Examples of the aromatic vinyl monomer include styrene and α-methylstyrene.

Examples of the N-substituted unsaturated carboxylic acid amide include N-methylolacrylamide and N-methylolmethacrylamide.

Examples of the heterocyclic vinyl compound include vinylpyrrolidone.

Examples of the vinylidene halide compound include vinylidene chloride and vinylidene fluoride.

Examples of the α-olefins include ethylene and propylene.

Examples of the dienes include butadiene.

As the monomer copolymerizable with the (meth)acrylic acid ester, a crosslinkable vinyl monomer may be used.

Examples of the crosslinkable vinyl monomer include compounds containing two or more vinyl groups such as methylenebisacrylamide, methylenebismethacrylamide, divinylbenzene, and polyethylene glycol chain-containing di(meth)acrylate.

Among the monomers copolymerizable with the (meth)acrylic acid ester, an aromatic vinyl monomer is preferable, and styrene is more preferable.

These monomers copolymerizable with the (meth)acrylic acid ester may be used singly or in combination of two or more kinds thereof.

The content ratio of the structural unit derived from a (meth)acrylic acid ester in the acrylic polymer (B) is, for example, 40 mass% or more, preferably 70 mass% or more, and more preferably 77 mass% or more, and is, for example, 100 mass% or less, based on the total amount of structural units derived from monomers. The content ratio of the structural unit derived from a monomer copolymerizable with the (meth)acrylic acid ester in the acrylic polymer (B) is, for example, 60 mass% or less, preferably 30 mass% or less, and more preferably 23 mass% or less, and is, for example, 0 mass% or more, based on the total amount of structural units derived from monomers.

When the contents of the structural unit derived from a (meth)acrylic acid ester and the structural unit derived from a monomer copolymerizable with the (meth)acrylic acid ester are in the above ranges, the composite particles (D) having excellent adhesion strength and blocking resistance are obtained.

That is, the acrylic polymer (B) may include only the structural unit derived from a (meth)acrylic acid ester, and may include the structural unit derived from a (meth)acrylic acid ester and the structural unit derived from a monomer copolymerizable with the (meth)acrylic acid ester. The acrylic polymer (B) may preferably include only the structural unit derived from a (meth)acrylic acid ester, or include the structural unit derived from a (meth)acrylic acid ester and the structural unit derived from a monomer copolymerizable with the (meth)acrylic acid ester in the above content ratios.

When a carboxy group-containing vinyl monomer is used as the monomer copolymerizable with the (meth)acrylic acid ester, from the viewpoint of the production stability of the composite particles (D), the content ratio of the structural unit derived from the carboxy group-containing vinyl monomer in the acrylic polymer (B) is, for example, 5 mass% or less and preferably 3 mass% or less, based on the total amount of structural units derived from monomers. Preferably, the structural unit derived from the carboxy group-containing vinyl monomer is not contained in the acrylic polymer (B).

The method for polymerizing the monomer including a (meth)acrylic acid ester is not particularly limited, and examples thereof include known polymerization methods. For example, a monomer including a (meth)acrylic acid ester and a polymerization initiator are added into water to polymerize the monomer including a (meth)acrylic acid ester.

The polymerization initiator is not particularly limited, and examples thereof include hydrogen peroxide; persulfates such as ammonium persulfate, potassium persulfate, and sodium persulfate; organic peroxides such as cumene hydroperoxide, t-butyl hydroperoxide, benzoyl peroxide, t-butyl peroxy-2-ethylhexanoate, t-butyl peroxybenzoate, and lauroyl peroxide; azo compounds such as azobisisobutyronitrile; and redox initiators by combination of an oxidant such as a hydrogen peroxide, a persulfate, an organic peroxide, or an azo compound with a substance generating metal ions such as iron ions and reducing agents such as sodium sulfoxylate, formaldehyde, sodium pyrosulfite, sodium bisulfite, L-ascorbic acid, or rongalite. These polymerization initiators may be used singly or in combination of two or more kinds thereof.

The amount of the polymerization initiator used is appropriately set according to the purpose and use application, and is, for example, 0.1 mass% or more and is, for example, 5 mass% or less, based on the total amount of monomers including a (meth)acrylic acid ester used for producing the acrylic polymer (B).

At the time of polymerization of the monomer including a (meth)acrylic acid ester, as necessary, a molecular weight regulator may be added.

Examples of the molecular weight regulator include mercaptans such as t-dodecyl mercaptan and n-dodecyl mercaptan; and allyl compounds such as allylsulfonic acid and methallylsulfonic acid or sodium salts of these allyl compounds. These molecular weight regulators may be used singly or in combination of two or more kinds thereof. The amount of the molecular weight regulator added is appropriately set according to the purpose and use application.

The polymerization of the monomer including a (meth)acrylic acid ester is usually performed under normal pressure. The polymerization temperature of the monomer including a (meth)acrylic acid ester is, for example, 30°C or higher and preferably 50°C or higher, and is, for example, 95°C or lower and preferably 85°C or lower. The polymerization time of the monomer including a (meth)acrylic acid ester is, for example, 1 hour or longer and preferably 2 hours or longer, and is, for example, 30 hours or shorter and preferably 20 hours or shorter.

At the time of polymerization of the monomer including a (meth)acrylic acid ester, from the viewpoint of improving polymerization stability, an emulsifier (surfactant) may be added as necessary.

Examples of the emulsifier include an anionic surfactant, a nonionic surfactant, and a cationic surfactant.

Examples of the anionic surfactant include sodium dodecylbenzenesulfonate, sodium laurylsulfate, sodium alkyldiphenyl ether disulfonate, sodium alkylnaphthalenesulfonate, sodium dialkylsulfosuccinate, sodium stearate, potassium oleate, sodium dioctylsulfosuccinate, sodium polyoxyethylene alkyl ether sulfate, sodium polyoxyethylene alkylphenyl ether sulfate, sodium dialkylsulfosuccinate, sodium stearate, sodium oleate, and sodium t-octylphenoxyethoxypolyethoxyethylsulfate.

Examples of the nonionic surfactant include polyoxyethylene lauryl ether, polyoxyethylene octylphenyl ether, polyoxyethylene oleylphenyl ether, polyoxyethylene nonylphenyl ether, an oxyethylene-oxypropylene block copolymer, t-octylphenoxyethyl polyethoxyethanol, and nonylphenoxyethyl polyethoxyethanol.

Examples of the cationic surfactant include lauryl trimethylammonium chloride and stearyl trimethylammonium chloride.

Among these emulsifiers, an anionic surfactant is preferable, and sodium dodecylbenzenesulfonate is more preferable.

These emulsifiers may be used singly or in combination of two or more kinds thereof.

The addition ratio of the emulsifier is not particularly limited, and is for example, 0.02 mass% or more and is, for example, 5 mass% or less, based on the total amount of monomers including a (meth)acrylic acid ester for producing the acrylic polymer (B), from the viewpoint of stability when the composite particles (D) are produced by the method described below.

When the monomer including a (meth)acrylic acid ester is polymerized, from the viewpoint of, for example, improving polymerization stability, additives such as a pH adjusting agent and a metal ion sealing agent such as ethylenediaminetetraacetic acid or a salt thereof may be added in an appropriate ratio.

The weight average molecular weight of the acrylic polymer (B) is, for example, 5,000 or more and preferably 10,000 or more, and is, for example, 1,000,000 or less and preferably 500,000 or less, in terms of standard polystyrene by gel permeation chromatography (GPC) measurement.

The glass transition temperature of the acrylic polymer (B) is, for example, -28°C or higher and preferably -10°C or higher, and is, for example, 80°C or lower and preferably 60°C or lower. When the glass transition temperature of the acrylic polymer (B) is in the above range, the composite particles (D) having excellent adhesion strength and blocking resistance can be obtained.

From the viewpoint of achieving improvement in adhesion strength, the glass transition temperature of the acrylic polymer (B) is preferably 20°C or lower and further preferably 10°C or lower.

From the viewpoint of achieving improvement in blocking resistance, the glass transition temperature of the acrylic polymer (B) is preferably higher than 0°C and further preferably 10°C or higher. The glass transition temperature of the acrylic polymer (B) can be set to a desired value, for example, by the combination of monomers, the content ratio of monomers, and the weight average molecular weight described above.

<Composite Particles (D)>

The composite particles (D) include the ethylene-unsaturated carboxylic acid copolymer mixture (A) and the acrylic polymer (B). The form of the composite particles (D) is not particularly limited as long as they include the ethylene-unsaturated carboxylic acid copolymer mixture (A) and the acrylic polymer (B), and examples thereof include a core/shell structure, a composite structure, a localized structure, a daruma-shaped structure, an octopus-shaped structure, a raspberry-shaped structure, a multiparticle composite structure, and an IPN structure.

In particular, a structure in which a phase composed of the acrylic polymer (B) is dispersed in a continuous phase of the ethylene-unsaturated carboxylic acid copolymer mixture (A) is preferable.

The method for producing such composite particles (D) is not particularly limited, and for example, the composite particles (D) can be produced by the following methods (1) to (3). Two or more kinds of ethylene-unsaturated carboxylic acid copolymers each having a different content of a structural unit derived from an unsaturated carboxylic acid can be individually produced by the above method, or these two or more kinds of ethylene-unsaturated carboxylic acid copolymers may be obtained as commercially available products.

Method (1): a method for producing composite particles (D), the method including: a step of mixing two or more kinds of ethylene-unsaturated carboxylic acid copolymers each having a different content of a structural unit derived from an unsaturated carboxylic acid and, as necessary, an olefin-based resin (c) to produce an ethylene-unsaturated carboxylic acid copolymer mixture (A); and

a step of polymerizing a monomer including a (meth)acrylic acid ester in the presence of the mixture (A) to produce an acrylic polymer (B).

Method (2): a method for producing composite particles (D), the method including: a step of emulsifying, in the presence of water, an ethylene-unsaturated carboxylic acid copolymer mixture (A) including two or more kinds of ethylene-unsaturated carboxylic acid copolymers each having a different content of a structural unit derived from an unsaturated carboxylic acid and, as necessary, an olefin-based resin (c) to obtain a dispersion 1; and

a step of adding a monomer including a (meth)acrylic acid ester into the dispersion 1 in the presence of a polymerization initiator and polymerizing an acrylic polymer (B) to obtain a dispersion 2 containing composite particles (D) having the ethylene-unsaturated carboxylic acid copolymer mixture (A) and the acrylic polymer (B).

Method (3): a method for producing composite particles (D), the method including: a step of polymerizing a monomer including a (meth)acrylic acid ester by the above method to produce an acrylic polymer (B);

a step of individually producing two or more kinds of ethylene-unsaturated carboxylic acid copolymers each having a different content of a structural unit derived from an unsaturated carboxylic acid by the above method in the presence of the obtained acrylic polymer (B) (for example, an aqueous dispersion of the acrylic polymer (B)); and

a step of further adding an olefin-based resin (c) as necessary.

Among these methods (1) to (3), the method (2) is preferable from the viewpoint that the composite particles (D) having desired properties can be reliably produced.

As for, for example, specific conditions and aspects of the step of obtaining the dispersion 1, for example, the conditions and aspects described for the production of the ethylene-unsaturated carboxylic acid copolymer mixture (A), particularly, for example, the conditions and aspects described for the production of the aqueous dispersion of the ethylene-unsaturated carboxylic acid copolymer mixture (A) can be applied. As for, for example, specific conditions and aspects when the acrylic polymer (B) is polymerized in the step of obtaining the dispersion 2, for example, the conditions and aspects described for the polymerization of the acrylic polymer (B), particularly, for example, the conditions and aspects when a monomer including a (meth)acrylic acid ester and a polymerization initiator are added into water to polymerize the monomer including a (meth)acrylic acid ester can be applied.

The content of the ethylene-unsaturated carboxylic acid copolymer mixture (A) in the composite particles (D) is preferably 20 mass% or more and 80 mass% or less and more preferably 30 mass% or more and 75 mass% or less.

The content of the acrylic polymer (B) in the composite particles (D) is preferably 20 mass% or more and 80 mass% or less and more preferably 25 mass% or more and 70 mass% or less.

When the contents of the ethylene-unsaturated carboxylic acid copolymer mixture (A) and the acrylic polymer (B) in the composite particles (D) are in the above ranges, the composite particles (D) having excellent adhesion strength are obtained.

The contents of the ethylene-unsaturated carboxylic acid copolymer mixture (A) and the acrylic polymer (B) in the composite particles (D) can be calculated from the charging ratio of the raw material components.

When the contents of the ethylene-unsaturated carboxylic acid copolymer mixture (A) and the acrylic polymer (B) are in the above ranges, the composite particles (D) having excellent adhesion strength are obtained.

The weight average particle diameter (measurement method: light scattering measurement) of the composite particles (D) is, for example, 10 nm or more, and is, for example, 10 um or less and preferably 1 um or less.

The volume average particle diameter of the composite particles (D) observed with an electron microscope is, for example, 50 nm or more, preferably 60 nm or more, and more preferably 80 nm or more, and is, for example, 300 nm or less, more preferably 200 nm or less, and further preferably 120 nm or less.

When the average particle diameter is in the above range, improvement in storage stability of the aqueous dispersion of the composite particles (D) can be achieved, and the transparency and water resistance of a laminate (described below) can be improved.

The aqueous dispersion obtained by the present invention may contain an additive in addition to the resin component.

Examples of the additives include the above-described emulsifier, a curing agent, a crosslinking agent, a film formation aid, an antifoaming agent, an anti-repelling agent, a leveling agent, a tackifier, a hardness imparting agent, an antiseptic, a thickener, an anti-freezing agent, a dispersant, an inorganic pigment, and an organic pigment. These additives may be used singly or in combination of two or more kinds thereof. The amount of these additives added, and, for example, the time of addition thereof are appropriately set according to the purpose and use application.

The solid content concentration of the aqueous dispersion obtained by the present invention is, for example, 10 mass% or more and preferably 20 mass% or more, and is, for example, 60 mass% or less and preferably 50 mass% or less. The solid content of the aqueous dispersion is a component including a resin component remaining when a volatile component of the aqueous dispersion is removed, for example, by heating.

The pH of the aqueous dispersion obtained by the present invention is, for example, 7 or more and preferably 8 or more, and is, for example, 11 or less and preferably 10 or less.

The aqueous dispersion obtained by the present invention can be suitably used for forming an adhesive layer (heat seal layer) of a laminate. The laminate including such an adhesive layer is excellent in adhesion strength. Therefore, the aqueous dispersion of the present invention is suitable as an adhesive composition.

A laminate of the present invention includes a substrate, and an adhesive layer laminated on at least one surface of the substrate,

in which the adhesive layer includes composite particles (D) having an ethylene-unsaturated carboxylic acid copolymer mixture (A) and an acrylic polymer (B), and
the ethylene-unsaturated carboxylic acid copolymer mixture (A) includes two or more kinds of ethylene-unsaturated carboxylic acid copolymers each having a different content of a structural unit derived from an unsaturated carboxylic acid. It is only necessary for the laminate to have the substrate and the adhesive layer including the composite particles (D) described above, and the laminate may have another layer.

The adhesive layer of the laminate is obtained, for example, by drying a coated product of the aqueous dispersion obtained by the present invention described above.

In the laminate of the present invention, the adhesive layer may be present on one side or both sides of the substrate. The adhesive layer may be present on the entire surface or a part of the substrate.

Examples of the substrate include cellophane; plastic films made of plastic materials such as polyethylene, an ethylene-vinyl acetate copolymer, an ionomer, polypropylene, polyamide (nylon), polyester such as polyethylene terephthalate, polyvinyl chloride, polyvinylidene chloride, polyvinyl alcohol, an ethylene-vinyl alcohol copolymer, polycarbonate, polystyrene, a polyacrylonitrile copolymer, and a mixture thereof; vapor deposition films in which vapor-deposited products of metals such as aluminum, gold, silver, copper, nickel, zinc, titanium, cobalt, indium, and chromium, or inorganic oxides such as aluminum oxide and silicon oxide are vapor-deposited on these plastic films; metal foils such as aluminum foils, paper, and nonwoven fabrics.

The paper that may be the substrate of the laminate is not particularly limited, and known paper containing pulp as a main component can be used. Examples of pulp as a main component of paper include chemical pulp such as leaf bleached kraft pulp (LBKP) and needle bleached kraft pulp (NBKP); mechanical pulp such as ground pulp (GP), pressure groundwood (PGW), refiner mechanical pulp (RMP), thermomechanical pulp (TMP), chemi-thermomechanical pulp (CTMP), chemi-mechanical pulp (CMP), and chemi-ground pulp (CGP); wood pulp such as deinked pulp (DIP); and nonwood pulp such as kenaf, bagasse, bamboo, and cotton.

These may be used singly or in combination of two or more kinds thereof. For example, as the pulp, pulp containing 90 to 100 mass% of leaf bleached kraft pulp (LBKP) can be used.

The pulp may contain synthetic fibers as long as the effects of the present invention are not impaired.

From the viewpoint of environmental conservation, among pulps, elemental chlorine free (ECF) pulp, total chlorine free (TCF) pulp, waste paper pulp, and pulp obtained from tree plantation are preferable.

The freeness of the pulp is, for example, 200 to 700 ml CSF and preferably 450 to 620 ml CSF based on Canadian standard freeness (freeness) (JIS P 8121:1995 "Pulps-Determination of drainability").

As paper serving as a substrate, paper containing a filler can also be used. Examples of the filler include light calcium carbonate, heavy calcium carbonate, talc, clay, kaolin, calcined clay, titanium dioxide, and aluminum hydroxide.

The content of the filler in the paper is, for example, 1 to 30 parts by mass per 100 parts by mass of the dry mass of the pulp. When light calcium carbonate is contained as a filler, light calcium carbonate may be contained in an amount of, for example, 1 to 10 parts by mass per 100 parts by mass of the dry mass of the pulp.

The paper may contain various known additives for papermaking in addition to pulp. Examples of the additives for papermaking include internal paper strength enhancers such as a sizing agent and a wet paper strength enhancer; bulking agents, yield improvers, water-filterability improvers, coloring dyes, coloring pigments, fluorescent brighteners, fluorescent decoloring agents, and pitch control agents.

The paper serving as a substrate may be paper coated with a water-soluble polymer such as starch, polyvinyl alcohol, or polyacrylamide.

The method for making paper serving as a substrate is not particularly limited, and for example, paper can be produced by paper machines such as a Fourdrinier paper machine, a Fourdrinier multilayer paper machine, a cylinder paper machine, a cylindrical multilayer paper machine, a Fourdrinier-cylindrical combined multilayer paper machine, and a twin-wire paper machine. The paper used in the laminate of the present invention may be single layer paper or multilayer paper, or may be an adhered product of a plurality of layers.

From the viewpoint of more excellent heat sealability of the adhesive layer included in the laminate, among these substrates, a metal foil is preferable, and an aluminum foil is more preferable.

These substrates may be used singly or in combination of two or more kinds thereof.

The adhesive layer included in the laminate of the present invention is obtained, for example, by applying (coating) an aqueous dispersion containing the composite particles (D) obtained in the present invention to at least one surface of the substrate, drying a layer formed of the coated product, and removing volatile components such as water contained in at least a part of the aqueous dispersion.

The method for applying (coating) the aqueous dispersion obtained in the present invention is not particularly limited, and examples thereof include a die coating method, a flow coating method, a spray coating method, a bar coating method, a gravure coating method, a gravure reverse coating method, a kiss reverse coating method, a microgravure coating method, a roll coating method, a blade coating method, a rod coating method, a roll doctor coating method, an air knife coating method, a comma roll coating method, a reverse roll coating method, a transfer roll coating method, a kiss roll coating method, a curtain coating method, and a printing method.

The drying conditions of the layer formed of the coated product of the aqueous dispersion are not particularly limited as long as volatile components such as moisture derived from the aqueous dispersion can be removed, and the drying temperature is, for example, 100 to 200°C and the drying time is, for example, 10 seconds to 30 minutes.

The thickness of the adhesive layer may be appropriately set according to, for example, a desired use application, and is, for example, 0.2 $\mu$m or more and preferably 1 $\mu$m or more, and is, for example, 100 $\mu$m or less and preferably 20 $\mu$m or less.

For the purpose of, for example, improving adhesion between the substrate and the adhesive layer in the laminate, before the adhesive layer is provided, the substrate may be subjected to a pretreatment such as a primer (such as titanate or polyethyleneimine) treatment, a corona discharge treatment, or a chemical conversion treatment.

When paper is used as the substrate of the laminate of the present invention, one or more coating layers may be provided in addition to the adhesive layer. Examples of such a coating layer include a pigment coating layer obtained from a coating liquid containing a pigment and an adhesive.

As the pigment contained in the pigment coating layer, a known pigment used in a coating layer of general printing coating paper can be used, and examples thereof include inorganic pigments such as calcium carbonate (such as heavy calcium carbonate and light calcium carbonate), kaolin (including clay), calcined clay, talc, magnesium carbonate, barium sulfate, calcium sulfate, titanium dioxide, zinc oxide, zinc sulfate, zinc carbonate, calcium silicate, aluminum silicate, magnesium silicate, diatomaceous earth, aluminum hydroxide, and magnesium hydroxide; and organic pigments (so-called plastic pigments) such as an acrylic resin, a styrene-based resin, a vinyl chloride-based resin, nylon, and a resin obtained by copolymerizing monomers constituting these resins.

As the pigment used for the pigment coating layer, for example, a combination of 20 to 40 parts by mass of kaolin and 60 to 80 parts by mass of heavy calcium carbonate can be used.

Also as the adhesive used for the pigment coating layer, a known adhesive used for a coating layer of general printing coated paper can be used, and examples thereof include starches such as butadiene-based copolymer latex, crosslinking-agent-modified starch, oxidized starch, enzyme-modified starch, esterified starch, etherified starch, cationic starch, and amphoteric starch; water-soluble polymers such as gelatin, casein, soybean protein, and polyvinyl alcohol; and synthetic resins of vinyl acetate, ethylene vinyl acetate, a polyurethane-based resin, an acrylic resin, a polyester-based resin, and a polyamide-based resin.

The blending ratio of the pigment and the adhesive in the pigment coating layer is not particularly limited, and is preferably 5 to 50 parts by mass of the adhesive per 100 parts by mass of the pigment. For example, an adhesive combination of 1 to 5 parts by mass of phosphate esterified starch and 5 to 15 parts by mass of styrene butadiene latex can be used per 100 parts by mass of the pigment.

The pigment coating layer may contain various auxiliaries as long as the effects of the present invention are not impaired, and for example, a viscosity modifier, a softener, a gloss imparting agent, a water-resistant agent, a dispersant, a flow modifier, an ultraviolet absorber, a stabilizer, an antistatic agent, a crosslinking agent, a sizing agent, a fluorescent brightener, a colorant, a pH adjuster, an antifoaming agent, a plasticizer, and an antiseptic agent may be contained.

The amount of the coating liquid to be coated for producing such a pigment coating layer is, for example, 2 to 40 $g/m^2$ in terms of solid content per one side of the base paper.

As an embodiment of the laminate using paper as a substrate of the present invention (for example, packaging paper), an adhesive layer obtained from the aqueous dispersion of the present invention may be provided on the pigment coating layer provided on paper, and as another embodiment, the pigment coating layer may be provided on only one surface of paper, and the adhesive layer may be provided on the other surface of paper on which the pigment coating layer is not provided.

The laminate of the present invention has an adhesive layer including the composite particles (D). This adhesive layer is excellent in heat-sealing strength. The adhesive layer included in the laminate of the present invention is usually produced from an aqueous dispersion having the composite particles (D). When the adhesive layer is prepared from such an aqueous dispersion, the amount of the organic solvent remaining in the adhesive layer is small, and the amount of the organic solvent remaining in the adhesive layer can be preferably 100 ppm or less and more preferably 10 ppm or less.

The laminate obtained in the present invention is suitably used as a material for heat sealing in various industrial fields.

By performing heat sealing, the substrate included in the laminate of the present invention and an adherend layer are bonded to each other with the adhesive layer interposed therebetween. The adherend layer may be included in the laminate of the present invention, or may be a layer included in an article different from the laminate of the present invention.

Specific examples of the adherend layer include the same materials as the substrate included in the laminate, such as a plastic film, a vapor deposition film, a metal foil, paper, and a nonwoven fabric.

Among these substrates, a plastic film is preferable, and a plastic film obtained from polyvinyl chloride, polyvinylidene chloride, or a mixture thereof is more preferable, from the viewpoint of more excellent heat sealability of the adhesive layer included in the laminate.

These adherend layers may be used singly or in combination of two or more kinds thereof.

The laminate of the present invention may include the adherend layer in addition to the substrate and the adhesive layer. In this case, the substrate and, for example, the adherend layer may be bonded to each other with the adhesive layer interposed therebetween. In the case of being bonded, in the laminate of the present invention, the adherend layer is laminated on the surface of the adhesive layer opposite to the surface in contact with the substrate.

The method for heat-sealing the substrate and the adherend layer is not particularly limited. For example, the substrate and the adherend layer included in the laminate are superimposed with the adhesive layer interposed therebetween, and then the laminate is heated and pressurized, whereby heat sealing can be performed.

When the adherend layer further includes an adhesive layer (2) including the composite particles (D), the adhesive layer included in the laminate of the present invention and the adhesive layer (2) are superimposed on each other, and then the laminate is heated and pressurized, whereby heat sealing may be performed.

The heating temperature at the time of heat-sealing is, for example, 80°C or higher and preferably 100°C or higher, and is, for example, 250°C or lower and preferably 200°C or lower. The pressure at the time of heat-sealing is, for example, 50 kPa or more and preferably 100 kPa or more, and is, for example, 500 kPa or less and preferably 300 kPa or less.

The adhesion strength between the substrate and the adherend layer included in the laminate of the present invention can be evaluated by the peeling strength between the substrate and the adherend layer. The peeling strength between the substrate and the adherend layer which are peeled off at 180 degrees after thermocompression bonding for 0.5 seconds under the conditions of a heating temperature of 170°C and a pressure of 2 $kg/cm^2$ is preferably 8 N or more.

The laminate in which the adherend layer is laminated on at least one surface of the adhesive layer included in the laminate in this manner (in other words, the laminate in which the adherend layer is laminated on at least one surface of the adhesive layer included in the laminate) is included in the laminate of the present invention regardless of the heat-sealed state (that is, before and after heat sealing).

The laminate obtained in the present invention is excellent in heat-sealing strength, and thus is suitably used as a packaging material in various industrial fields.

An object to be packaged using a packaging material including the laminate of the present invention is not particularly limited, and examples thereof include various industrial products, for example, foods such as confectionery, tea leaves, and spices; fragrances such as cigarettes and scents; pharmaceutical products, and paper.

The packaging material including the laminate of the present invention is excellent in heat-sealing strength. Therefore, for example, an effect of suppressing deterioration of the heat-sealed object to be packaged is expected. When the aqueous dispersion of the present invention is used for producing the adhesive layer, a load on the environment is small.

Examples

Hereinafter, the present invention will be specifically described by means of Examples and Comparative Examples; however, the present invention is not limited thereto.

The polymers used in Examples 1-1 to 1-13 and Comparative Examples 1-1 to 1-3 are as follows.

Ethylene-unsaturated carboxylic acid copolymer (a1-1): ethylene-methacrylic acid copolymer (EMAA); content of structural unit derived from ethylene: 80 mass%, content of structural unit derived from methacrylic acid: 20 mass%

Ethylene-unsaturated carboxylic acid copolymer (a1-2): EMAA; content of structural unit derived from ethylene: 85 mass%, content of structural unit derived from methacrylic acid: 15 mass%

Ethylene-unsaturated carboxylic acid copolymer (a1-3): ethylene-acrylic acid copolymer (EAA); content of structural unit derived from ethylene: 82 mass%, content of structural unit derived from acrylic acid: 18 mass%

Ethylene-unsaturated carboxylic acid copolymer (a2-1): EMAA; content of structural unit derived from ethylene: 90 mass%, content of structural unit derived from methacrylic acid: 10 mass%

Ethylene-unsaturated carboxylic acid copolymer (a2-2): EMAA; content of structural unit derived from ethylene: 92 mass%, content of structural unit derived from methacrylic acid: 8 mass%

Ethylene-unsaturated carboxylic acid copolymer (a2-3): EMAA; content of structural unit derived from ethylene: 96 mass%, content of structural unit derived from methacrylic acid: 4 mass%

Olefin-based polymer (c-1): ethylene-vinyl acetate copolymer (EVA); content of structural unit derived from ethylene: 72 mass%, content of structural unit derived from vinyl acetate: 28 mass%

Olefin-based polymer (c-2): ethylene-1-butene copolymer (EBR); content of structural unit derived from ethylene: 93 mol%

Olefin-based polymer (c-3): low-density polyethylene (LDPE); density 918 kg/m$^3$

The monomers used for producing the acrylic polymer in each of Examples and Comparative Examples described in Tables 1 and 2 are as follows.

MMA: methyl methacrylate
nBMA: n-butyl methacrylate
nBA: n-butyl acrylate
ST: styrene

(Example 1-1)

Into a uniaxial extruder, 50 parts by mass of the ethylene-unsaturated carboxylic acid copolymer (a1-1), 25 parts by mass of the ethylene-unsaturated carboxylic acid copolymer (a1-2), and 25 parts by mass of the ethylene-unsaturated carboxylic acid copolymer (a2-1) were charged, and melt-kneaded at 150°C to obtain 100 parts by mass of a resin mixture.

Into a reaction vessel 1, 100 parts by mass of the obtained resin mixture, 6.3 parts by mass of a 48 mass% aqueous potassium hydroxide solution, and 158 parts by mass of deionized water were charged, heated to 150°C under a nitrogen flow with stirring, and held at 150°C for 4 hours under stirring conditions, thereby obtaining a raw material aqueous dispersion (α1) including an ethylene-unsaturated carboxylic acid copolymer mixture (A-1) containing three kinds of ethylene-unsaturated carboxylic acid copolymers each having a different content of a structural unit derived from an unsaturated carboxylic acid. The degree of neutralization of the obtained raw material aqueous dispersion (α1) was measured by the following method.

Subsequently, into another reaction vessel 2, 278 parts by mass of the obtained raw material aqueous dispersion (α1) including the mixture (A-1) and 80 parts by mass of deionized water were charged, and heated to 80°C under a nitrogen flow, and 0.3 parts by mass of potassium persulfate (polymerization initiator) was added thereto.

Separately, 79 parts by mass of n-butyl methacrylate, 21 parts by mass of n-butyl acrylate, and 0.2 parts by mass of n-dodecyl mercaptan (molecular weight regulator) were emulsified in 40 parts by mass of deionized water by adding 0.4 parts by mass of sodium dodecylbenzenesulfonate (emulsifier) to obtain an emulsified mixture (β-1).

The obtained emulsified mixture (β-1) was dropped into the reaction vessel 2 held at 80°C, over 2 hours, and further held at 80°C for 2 hours to complete the polymerization reaction, and then the polymerization reaction was stopped. Thus, an acrylic polymer (B-1) including a structural unit derived from a (meth)acrylic acid ester was produced, and an aqueous dispersion including composite particles (D-1) having the ethylene-unsaturated carboxylic acid copolymer mixture (A-1) and the acrylic polymer (B-1) was obtained. The degree of neutralization of the ethylene-unsaturated carboxylic acid copolymer mixture (A-1), the polymerization stability at the time of producing the aqueous dispersion, and the storage stability of the obtained aqueous dispersion were evaluated by the following methods.

(Examples 1-2 to 1-8 and Comparative Examples 1-1 to 1-3)

In Examples 1-2 to 1-8 and Comparative Examples 1-1 to 1-3, raw material aqueous dispersion liquid production of an ethylene-unsaturated carboxylic acid copolymer mixture (raw material aqueous dispersion liquid of an ethylene-unsaturated carboxylic acid copolymer in Comparative Examples 1 to 3) and polymerization of an acrylic polymer were performed to produce an aqueous dispersion liquid including composite particles, in the same manner as in Example 1-1, except that the type and the amount added of the ethylene-unsaturated carboxylic acid copolymer to be used were changed as described in Tables 1 and 2, the amount of potassium hydroxide added and the amount of deionized water added were changed so as to have the degree of neutralization and the solid content concentration described in Tables 1 and 2, and the type and the amount added of the monomer for producing the acrylic polymer (B) were changed as described in Tables 1 and 2. The degree of neutralization of the ethylene-unsaturated carboxylic acid copolymer mixture or the ethylene-unsaturated carboxylic acid copolymer included in the raw material dispersion, the polymerization stability at the time of producing the aqueous dispersion, and the storage stability of the obtained aqueous dispersion were evaluated by the following methods.

(Examples 1-9 to 1-13)

In Examples 1-9 to 1-13, 100 parts by mass of a resin mixture was produced by melt-kneading in the same manner as in Example 1-1, except that the type and the amount added of the ethylene-unsaturated carboxylic acid copolymer (a) and the olefin-based polymer (c) included in the ethylene-unsaturated carboxylic acid copolymer mixture (A-1) were replaced as described in Table 2, and the amount of potassium hydroxide added and the amount of deionized water added were changed so as to have the degree of neutralization and the solid content concentration described in Tables 1 and 2, and acrylic polymer polymerization was performed to produce an aqueous dispersion liquid including composite particles, in the same manner as in Example 1-1, except that the type and the amount added of the monomer for producing the acrylic polymer (B) were changed as described in Table 2. The degree of neutralization of the ethylene-unsaturated carboxylic acid copolymer mixture included in the raw material dispersion, the polymerization stability at the time of producing the aqueous dispersion, and the storage stability of the obtained aqueous dispersion were evaluated by the following methods.

<Degree of Neutralization>

The degree of neutralization of the whole ethylene-unsaturated carboxylic acid copolymer mixture or the ethylene-unsaturated carboxylic acid copolymer used in each of Examples 1-1 to 1-13 and Comparative Examples 1-1 to 1-3 was measured as follows.

A coating film was produced from the aqueous dispersion obtained in each of Examples and Comparative Examples, and the infrared absorption spectrum of the coating film was measured by a Fourier transform infrared spectrophotometer (FT-IR) to determine the peak height of absorption at 1700 cm$^{-1}$ corresponding to a carboxy group, and this height was defined as a peak height "a".

The ethylene-unsaturated carboxylic acid copolymer mixture used in Examples or the ethylene-unsaturated carboxylic acid copolymer used in Comparative Examples was brought into contact with hydrochloric acid to remove (demetallize) metal ions included in the resin component of the aqueous dispersion, thereby obtaining an ethylene-unsaturated carboxylic acid copolymer not including metal ions. The same sample as described above was produced from this copolymer, and the infrared absorption spectrum was measured in the same manner to determine the peak height of absorption at 1700 cm$^{-1}$, and this height was defined as a peak height "b".

The degree of neutralization (%) was determined from these obtained values by the following formula.

$$\text{Degree of neutralization (\%)} = 100 - 100 \times (\text{Peak height "a"})/(\text{Peak height "b"})$$

The peak height "a" corresponds to the number of carboxy groups not bonded to the metal ion in the copolymer mixture or copolymer. The peak height "b" corresponds to the number of all carboxy groups included in the copolymer mixture or copolymer.

<Polymerization Stability>

From the state of the aqueous dispersion of the composite particles after the polymerization of the acrylic polymer in Examples 1-1 to 1-13 and Comparative Examples 1-1 to 1-3, evaluation was performed according to the following criteria. The aggregate amount was determined by the following method.

OO: The aggregate amount was less than 500 ppm.
O: The aggregate amount was 500 ppm or more and less than 2000 ppm, and flowability was maintained.
Δ: The aggregate amount was as large as 2000 ppm or more, but the flowability of the liquid was maintained.
X: The aggregate amount was large, and the flowability of the liquid was lost.

(Method of Measuring Aggregate Amount)

About 100 g of the aqueous dispersion of the composite particles obtained in the above Examples and Comparative Examples was weighed, and the mass (a (g)) of the aqueous dispersion was measured. The mass (b (g)) of a stainless steel mesh ($\Phi51$ mm $\times$ 300 mesh) was measured in advance, the weighed aqueous dispersion was filtered using the stainless steel mesh, the filtered product was dried together with the stainless steel mesh at 150°C for 40 minutes and then left to cool, and the mass (c (g)) of the mesh and the dried product of the filtered product was measured.
The aggregate amount (ppm) was determined from these obtained measured values by the following formula.

$$\text{Aggregate amount (ppm)} = (c - b) \times 1{,}000{,}000/a$$

<Storage Stability>

The dispersion of the composite particles obtained in the above Examples and Comparative Examples was stored at 40°C for 3 months, and the state of the aqueous dispersion after storage was evaluated according to the following criteria.

OO: There is no liquid separation.
X: The liquid is separated into two layers, and a solid layer was formed on the upper part of the liquid.

[Table 1]

| No | | | | | | Example | | | |
|---|---|---|---|---|---|---|---|---|---|
| | | | | | | 1-1 | 1-2 | 1-3 | 1-4 |
| Composite particles (D) | (A) | Ethylene-unsaturated carboxylic acid copolymer (a) | EMAA | Content of structural unit derived from unsaturated carboxylic acid: 20% | (a1-1) | 50 | 50 | 50 | 50 |
| | | | | Content of structural unit derived from unsaturated carboxylic acid: 15% | (a1-2) | 25 | 25 | 25 | 25 |
| | | | | Content of structural unit derived from unsaturated carboxylic acid: 10% | (a2-1) | 25 | 25 | 25 | 25 |
| | | | | Content of structural unit derived from unsaturated carboxylic acid :8% | (a2-2) | | | | |
| | | | | Content of structural unit derived from unsaturated carboxylic acid: 4% | (a2-3) | | | | |
| | | | EAA | Content of structural unit derived from unsaturated carboxylic acid: 18% | (a1-3) | | | | |
| | | Olefin-based polymer (c) | EVA | | (c1) | | | | |
| | | | EBR | | (c2) | | | | |
| | | | LDPE | | (c3) | | | | |

Table 1 (continued)

| No | | | | Example | | | |
|---|---|---|---|---|---|---|---|
| | | | | 1-1 | 1-2 | 1-3 | 1-4 |
| Composite particles (D) | (A) | | (a) / (c) (mass ratio) | 100/0 | 100/0 | 100/0 | 100/0 |
| | | | Content of structural unit derived from unsaturated carboxylic acid (average value) | 16.25 | 16.25 | 16.25 | 16.25 |
| | | | Degree of neutralization | 27.5 | 27.5 | 27.5 | 27.5 |
| | (B) | Acrylic polymer | Monomer MMA | | | | 4 |
| | | | Monomer nBMA | 79 | 79 | 100 | |
| | | | Monomer nBA | 21 | 21 | | 47 |
| | | | Monomer ST | | | | 49 |
| | | | Resin Tg (calculation) | 0 | 0 | 20 | 7 |
| | (A) /(B) (mass ratio) | | | 52/48 | 52/48 | 57/43 | 35/65 |
| | Solid content (mass%) | | | 42 | 44 | 40 | 41 |
| Result | Polymerization stability | | | OO | O | O | O |
| | Storage stability | | | OO | OO | OO | OO |

Table 1 (continued)

| No | | | | | Example | | | |
|---|---|---|---|---|---|---|---|---|
| | | | | | 1-5 | 1-6 | 1-7 | 1-8 |
| Composite particles (D) | (A) | Ethylene-unsaturated carboxylic acid copolymer (a) | EMAA | Content of structural unit derived from unsaturated carboxylic acid: 20% (a1-1) | | 40 | 45 | |
| | | | | Content of structural unit derived from unsaturated carboxylic acid: 15% (a1-2) | 50 | 30 | 22 | |
| | | | | Content of structural unit derived from unsaturated carboxylic acid: 10% (a2-1) | 50 | | 22 | 15 |
| | | | | Content of structural unit derived from unsaturated carboxylic acid: 8% (a2-2) | | 30 | | |
| | | | | Content of structural unit derived from unsaturated carboxylic acid: 4% (a2-3) | | | 11 | 5 |
| | | | EAA | Content of structural unit derived from unsaturated carboxylic acid: 18% (a1-3) | | | | 80 |
| | | Olefin-based polymer (c) | | EVA (c1) | | | | |
| | | | | EBR (c2) | | | | |
| | | | | LDPE (c3) | | | | |

Table 1 (continued)

| No | | | | Example | | | |
|---|---|---|---|---|---|---|---|
| | | | | 1-5 | 1-6 | 1-7 | 1-8 |
| Composite particles (D) | (A) | (a) / (c) (mass ratio) | | 100/0 | 100/0 | 100/0 | 100/0 |
| | | Content of structural unit derived from unsaturated carboxylic acid (average value) | | 12.5 | 14.9 | 14.9 | 16.1 |
| | | Degree of neutralization | | 54 | 30 | 30 | 50 |
| | (B) | Acrylic polymer | Monomer | MMA | | | |
| | | | | nBMA | 79 | 79 | 79 | 79 |
| | | | | nBA | 21 | 21 | 21 | 21 |
| | | | | ST | | | | |
| | | | Resin Tg (calculation) | 0 | 0 | 0 | 0 |
| | (A) /(B) (mass ratio) | | | 65/35 | 52/48 | 52/48 | 52/48 |
| | Solid content (mass%) | | | 42 | 42 | 42 | 42 |
| Result | Polymerization stability | | | OO | OO | OO | OO |
| | Storage stability | | | OO | OO | OO | OO |

[Table 2]

| No | | | | | | | Example | | | |
|---|---|---|---|---|---|---|---|---|---|---|
| | | | | | | | 1-9 | 1-10 | 1-11 | 1-12 |
| Composite particles (D) | (A) | Ethylene-unsaturated carboxylic acid copolymer (a) | EMAA | Content of structural unit derived from unsaturated carboxylic acid: 20% | (a1-1) | | 40 | 40 | 40 | 40 |
| | | | | Content of structural unit derived from unsaturated carboxylic acid: 15% | (a1-2) | | 20 | 20 | 20 | 20 |
| | | | | Content of structural unit derived from unsaturated carboxylic acid: 10% | (a2-1) | | 20 | 20 | 20 | 20 |
| | | | | Content of structural unit derived from unsaturated carboxylic acid: 8% | (a2-2) | | | | | |
| | | | | Content of structural unit derived from unsaturated carboxylic acid: 4% | (a2-3) | | | 10 | | |
| | | | EAA | Content of structural unit derived from unsaturated carboxylic acid: 18% | (a1-3) | | | | | |
| | | Olefin-based polymer (c) | EVA | | (c1) | | 20 | 10 | 20 | |
| | | | EBR | | (c2) | | | | | 20 |
| | | | LDPE | | (c3) | | | | | |

Table 2 (continued)

| No | | | | | Example | | | |
|---|---|---|---|---|---|---|---|---|
| | | | | | 1-9 | 1-10 | 1-11 | 1-12 |
| Composite particles (D) | (A) | (a) / (c) (mass ratio) | | | 80/20 | 90/10 | 80/20 | 80/20 |
| | | Content of structural unit derived from unsaturated carboxylic acid (average value) | | | 13 | 13.4 | 13 | 13 |
| | | Degree of neutralization | | | 27.5 | 30 | 27.5 | 27.5 |
| | (B) | Acrylic polymer | Monomer | MMA | | | 35 | |
| | | | | nBMA | 79 | 100 | 65 | 79 |
| | | | | nBA | 21 | | | 21 |
| | | | | ST | | | | |
| | | | Resin Tg (calculation) | | 0 | 20 | 45 | 0 |
| | (A) /(B) (mass ratio) | | | | 52/48 | 57/43 | 64/36 | 52/48 |
| | Solid content (mass%) | | | | 42 | 42 | 40 | 42 |
| Result | Polymerization stability | | | | ⊚ | ○ | ○ | ⊚ |
| | Storage stability | | | | ⊚ | ⊚ | ⊚ | ⊚ |

Table 2 (continued)

| No | | | | | | Example | Comparative Example | | |
|---|---|---|---|---|---|---|---|---|---|
| | | | | | | 1-13 | 1-1 | 1-2 | 1-3 |
| Composite particles (D) | (A) | Ethylene-unsaturated carboxylic acid copolymer (a) | EMAA | Content of structural unit derived from unsaturated carboxylic acid: 20% | (a1-1) | 40 | 100 | 100 | |
| | | | | Content of structural unit derived from unsaturated carboxylic acid: 15% | (a1-2) | 20 | | | 100 |
| | | | | Content of structural unit derived from unsaturated carboxylic acid: 10% | (a2-1) | 20 | | | |
| | | | | Content of structural unit derived from unsaturated carboxylic acid: 8% | (a2-2) | | | | |
| | | | | Content of structural unit derived from unsaturated carboxylic acid: 4% | (a2-3) | | | | |
| | | | EAA | Content of structural unit derived from unsaturated carboxylic acid: 18% | (a1-3) | | | | |
| | | Olefin-based polymer (c) | EVA | | (c1) | | | | |
| | | | EBR | | (c2) | | | | |
| | | | LDPE | | (c3) | 20 | | | |

Table 2 (continued)

| No | | | | Example | Comparative Example | | |
|---|---|---|---|---|---|---|---|
| | | | | 1-13 | 1-1 | 1-2 | 1-3 |
| Composite particles (D) | (A) | (a) / (c) (mass ratio) | | 80/20 | 100/0 | 100/0 | 100/0 |
| | | Content of structural unit derived from unsaturated carboxylic acid (average value) | | 13 | 20 | 20 | 15 |
| | | Degree of neutralization | | 27.5 | 54 | 54 | 60 |
| | (B) | Acrylic polymer | Monomer MMA | | | | |
| | | | nBMA | 79 | 79 | 79 | 79 |
| | | | nBA | 21 | 21 | 21 | 21 |
| | | | ST | | | | |
| | | Resin Tg (calculation) | | 0 | 0 | 0 | 0 |
| | (A) /(B) (mass ratio) | | | 52/48 | 52/48 | 52/48 | 52/48 |
| | Solid content (mass%) | | | 42 | 42 | 44 | 42 |
| Result | Polymerization stability | | | OO | Δ | X | X |
| | Storage stability | | | OO | X | - | |

Substrate films used in Examples 2-1 to 2-10 described in the following Table 3 are as follows.

AL: hard aluminum foil (thickness: 20 $\mu$m)
Paper: one-side glazed kraft paper (basis weight: 80 g/m$^2$)

Adherend films used in the test of the peeling strength described in the following Table 3 are as follows.

AL(1): laminated film having an adhesive layer, which is produced from the aqueous dispersion of the composite particles (D) obtained in Example 1-1, on a substrate film AL (hard aluminum foil), produced in Example 2-1
AL(2): laminated film having an adhesive layer, which is produced from the aqueous dispersion of the composite particles (D) obtained in Example 1-3, on a substrate film AL, produced in Example 2-2
Paper (1): laminated film having an adhesive layer, which is produced from the aqueous dispersion of the composite particles (D) obtained in Example 1-6, on a non-glazed surface of a substrate film paper, produced in Example 2-3
PVC: polyvinyl chloride film (thickness: 200 $\mu$m)
PVDC: PVC/polyvinylidene chloride (PVDC) laminated film (thickness: 320 $\mu$m; PVC thickness 250 $\mu$m + PVDC thickness 70 $\mu$m; PVDC layer being a surface overlapping adhesive layer)
APET: amorphous polyethylene terephthalate film (thickness: 300 $\mu$m)
AL: hard aluminum foil (thickness: 20 $\mu$m)

(Examples 2-1 to 2-10)

<Method for Applying Aqueous Dispersion>

The aqueous dispersion including the composite particles (D) obtained in the above Examples described in the following Table 3 was applied to a substrate film described in the following Table 3 with a wire bar so as to have a coating amount of 4 g/m$^2$, and dried (drying conditions: 120°C, 15 seconds) in order to remove volatile components from the coated product, thereby obtaining a laminate having an adhesive layer composed of the composite particles (D) on the substrate film. For paper, an adhesive layer is formed on a non-glazed surface of the paper.
The obtained laminate was evaluated for transparency, substrate adhesion, blocking resistance, and peeling strength by the following methods.

(Transparency)

For Examples in which a hard aluminum foil (AL) was used as a substrate film, the transparency of the adhesive layer composed of the composite particles (D) formed on the substrate film of the obtained laminate was visually evaluated in the following three grades.

OO: transparent
O: transparent but slightly cloudy
X: severely cloudy

(Substrate Adhesion)

An adhesive tape was attached to the surface of the adhesive layer composed of the composite particles (D) included in the laminate obtained in each Example, and the degree of peeling of the adhesive layer from the substrate film when the adhesive tape was peeled off by hand was evaluated in the following three grades.

OO: There is no peeling of the coating film, or destruction of the substrate occurs (in the case of a paper substrate).
O: The peeling of the coating film was partially confirmed.
X: The coating film was completely peeled off.

(Blocking Resistance)

Two square test pieces of 5 × 5 cm in length and width were cut out from the laminate obtained in each Example. These two test pieces were superposed so that the adhesive layers composed of the composite particles (D) superimposed on each other, a load of 250 g/cm$^2$ was applied from above the two superimposed test pieces, the test pieces were left to stand still at 40°C for 24 hours, and the two test pieces after being left to stand still were peeled off, and the blocking resistance was evaluated according to the following criteria of three grades.

OO: The superimposed adhesive layers were peeled off from each other without resistance.
O: Adhesion to a part of the adhesive layers was confirmed.
X: Adhesion to whole surfaces of the adhesive layers was confirmed.

(Peeling Strength)

The laminate obtained in each Example was left to stand at normal temperature all day and all night, a strip-shaped test film having a width of 15 mm was then cut out from the laminate, and the surface of the adhesive layer composed of the composite particles (D) of the test film was superimposed on an adherend film described in the following Table 3, and heat-sealed under the conditions of 170°C and a pressure of 2 kg/cm$^2$ for 0.5 seconds to obtain a test piece. Using the obtained test piece, T-shaped peeling was performed at a tension rate of 50 mm/sec in Examples using the laminates obtained in Examples 1-3 and 1-6, 180 degree peeling was performed at a tension rate of 200 mm/sec in other Examples, and the peeling strength was measured.

[Table 3]

| Example No. | 2-1[1] | 2-2[1] | 2-3[1] | 2-4 | 2-5 |
|---|---|---|---|---|---|
| Composite particles (D) used | Example 1-1 | Example 1-3 | Example 1-6 | Example 1-9 | Example 1-9 |
| Substrate film | AL | AL | Paper | AL | AL |
| Adherend film | AL (1) | AL (2) | Paper (1) | PVC | PVDC |
| Result | Transparency | OO | OO | – | OO | OO |
| | Substrate adhesion | OO | OO | OO | OO | OO |
| | Blocking resistance | O | OO | OO | O | O |
| | Peeling strength (N) | 10.2 | 8.9 | 4.4[2] | 16.5 | 17.8 |

1) The surfaces of the adhesive layers of the laminate (film) superimposed on each other
2) Destruction of paper substrate serving as substrate film

Table 3 (continued)

| Example No. | 2-6 | 2-7 | 2-8 | 2-9[1] | 2-10[1] |
|---|---|---|---|---|---|
| Composite particles (D) used | Example 1-9 | Example 1-10 | Example 1-11 | Example 1-12 | Example 1-13 |
| Substrate film | Paper | AL | AL | AL | AL |
| Adherend film | PVC | PVC | APET | AL | AL |
| Result | Transparency | – | OO | OO | OO | OO |
| | Substrate adhesion | OO | OO | OO | OO | OO |
| | Blocking resistance | O | OO | OO | OO | OO |
| | Peeling strength (N) | 4.1[2] | 15.1 | 13 | 8.7 | 9.1 |

1) The surfaces of the adhesive layers of the laminate (film) superimposed on each other
2) Destruction of paper substrate serving as substrate film

## Claims

1. An aqueous dispersion comprising: a resin component; and water,

   wherein the resin component comprises composite particles (D) having an ethylene-unsaturated carboxylic acid copolymer mixture (A) and an acrylic polymer (B), and
   the ethylene-unsaturated carboxylic acid copolymer mixture (A) comprises two or more kinds of ethylene-unsaturated carboxylic acid copolymers each having a different content of a structural unit derived from an unsaturated carboxylic acid.

**2.** The aqueous dispersion according to claim 1, wherein the total content of the structural units derived from an unsaturated carboxylic acid included in the ethylene-unsaturated carboxylic acid copolymers in the ethylene-unsaturated carboxylic acid copolymer mixture (A) is 5 mass% or more based on the total amount of structural units derived from monomers of the polymer included in the mixture (A).

**3.** The aqueous dispersion according to claim 1 or 2, wherein the ethylene-unsaturated carboxylic acid copolymer mixture (A) comprises one or more kinds of each of

an ethylene-unsaturated carboxylic acid copolymer (a1) having a content of a structural unit derived from an unsaturated carboxylic acid of 12 mass% or more and 30 mass% or less, and an ethylene-unsaturated carboxylic acid copolymer (a2) having a content of a structural unit derived from an unsaturated carboxylic acid of less than 12 mass%, and
a content of the ethylene-unsaturated carboxylic acid copolymer (a1) in the mixture (A) is 30 mass% or more and 90 mass% or less.

**4.** The aqueous dispersion according to any one of claims 1 to 3, wherein a content of the ethylene-unsaturated carboxylic acid copolymer mixture (A) in the composite particles (D) is 20 mass% or more and 80 mass% or less, and a content of the acrylic polymer (B) is 20 mass% or more and 80 mass% or less, provided that the total amount of (A) and (B) is regarded as 100 mass%.

**5.** The aqueous dispersion according to any one of claims 1 to 4, wherein the ethylene-unsaturated carboxylic acid copolymer mixture (A) further comprises an olefin-based polymer (c), and
the total content of the ethylene-unsaturated carboxylic acid copolymers in the mixture (A) is 60 mass% or more.

**6.** The aqueous dispersion according to claim 5, wherein the olefin-based polymer (c) comprises at least one polymer selected from the group consisting of low-density polyethylene, an ethylene-1-butene copolymer, an ethylene-propylene copolymer, an ethylene-1-butene-propylene copolymer, an ethylene-propylene-ethylidene norbornene copolymer, an ethylene-(meth)acrylic acid ester copolymer, an ethylene-(meth)acrylic acid ester-unsaturated carboxylic acid copolymer, an ethylene-vinyl acetate copolymer, and an ethylene-vinyl acetate-carbon monoxide copolymer.

**7.** A method for producing the aqueous dispersion according to any one of claims 1 to 6, the method comprising:

a step of emulsifying, in the presence of water, an ethylene-unsaturated carboxylic acid copolymer mixture (A) comprising two or more kinds of ethylene-unsaturated carboxylic acid copolymers each having a different content of a structural unit derived from an unsaturated carboxylic acid to obtain a dispersion 1; and
a step of adding a monomer including a (meth)acrylic acid ester into the dispersion 1 in the presence of a polymerization initiator and polymerizing an acrylic polymer (B) to obtain a dispersion 2 containing composite particles (D) having the ethylene-unsaturated carboxylic acid copolymer mixture (A) and the acrylic polymer (B).

**8.** A laminate comprising: a substrate; and an adhesive layer laminated on at least one surface of the substrate, wherein the adhesive layer is obtained by drying a coated product of the aqueous dispersion according to any one of claims 1 to 6.

**9.** The laminate according to claim 8, further comprising an adherend layer laminated on a surface of the adhesive layer opposite to a surface in contact with the substrate.

**10.** The laminate according to claim 8 or 9, wherein the substrate is a plastic film, a vapor deposition film, a metal foil, paper, or a nonwoven fabric.

**11.** The laminate according to claim 9 or 10, wherein the adherend layer is a plastic film, a vapor deposition film, a metal foil, paper, or a nonwoven fabric.

**12.** The laminate according to any one of claims 9 to 11, wherein the adherend layer is a plastic film obtained from polyvinyl chloride, polyvinylidene chloride, or a mixture thereof.

**13.** A laminate comprising: a substrate; and an adhesive layer laminated on at least one surface of the substrate, wherein the adhesive layer comprises composite particles (D) having an ethylene-unsaturated carboxylic acid copolymer mixture (A) and an acrylic polymer (B), and

the ethylene-unsaturated carboxylic acid copolymer mixture (A) comprises two or more kinds of ethylene-unsaturated carboxylic acid copolymers each having a different content of a structural unit derived from an unsaturated carboxylic acid.

## INTERNATIONAL SEARCH REPORT

International application No.

PCT/JP2021/026283

### A. CLASSIFICATION OF SUBJECT MATTER

B32B 27/00(2006.01)i; B32B 27/30(2006.01)i; B32B 27/32(2006.01)i; C08L 23/00(2006.01)i; C08L 23/08(2006.01)i; C08L 33/00(2006.01)i
FI:      C08L23/08; C08L33/00; C08L23/00; B32B27/00 M; B32B27/30 A;
         B32B27/32 101

According to International Patent Classification (IPC) or to both national classification and IPC

### B. FIELDS SEARCHED

Minimum documentation searched (classification system followed by classification symbols)
B32B27/00; B32B27/30; B32B27/32; C08L23/00; C08L23/08; C08L33/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2016/076130 A1 (MITSUI CHEMICALS, INC.) 19 May 2016 (2016-05-19) | 1–13 |
| A | WO 2018/142997 A1 (MITSUI CHEMICALS, INC.) 09 August 2018 (2018-08-09) | 1–13 |
| A | JP 2001-206953 A (DU PONT-MITSUI POLYCHEMICALS CO., LTD.) 31 July 2001 (2001-07-31) | 1–13 |
| A | JP 2003-276126 A (DU PONT-MITSUI POLYCHEMICALS CO., LTD.) 30 September 2003 (2003-09-30) | 1–13 |

☐ Further documents are listed in the continuation of Box C.   ☒ See patent family annex.

| | |
|---|---|
| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 September 2021 (13.09.2021) | 21 September 2021 (21.09.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/026283

| Patent Documents referred in the Report | Publication Date | Patent Family | Publication Date |
|---|---|---|---|
| WO 2016/076130 A1 | 19 May 2016 | US 2018/0282596 A1<br>EP 3219750 A1<br>CN 107075197 A | |
| WO 2018/142997 A1 | 09 Aug. 2018 | US 2019/0375965 A1<br>EP 3578601 A1<br>CN 110198980 A | |
| JP 2001-206953 A | 31 Jul. 2001 | (Family: none) | |
| JP 2003-276126 A | 30 Sep. 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018142997 A
- JP H7008933 B
- JP H5039975 B
- JP H4030970 B
- JP S42000275 B
- JP S42023085 B
- JP S45029909 B
- JP S51062890 A